(19) Europäisches Patentamt / European Patent Office / Office européen des brevets

(11) **EP 4 692 219 A1**

(12) **EUROPEAN PATENT APPLICATION**
published in accordance with Art. 153(4) EPC

(43) Date of publication:
**11.02.2026  Bulletin 2026/07**

(21) Application number: **24780426.3**

(22) Date of filing: **27.03.2024**

(51) International Patent Classification (IPC):
**C08L 25/04** (2006.01)       **C08J 11/04** (2006.01)

(52) Cooperative Patent Classification (CPC):
**C08J 11/04; C08L 25/04;** Y02W 30/62

(86) International application number:
**PCT/JP2024/012207**

(87) International publication number:
**WO 2024/204320 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023  JP 2023059517**

(71) Applicant: **Toyo Styrene Co., Ltd.
Tokyo 105-0003 (JP)**

(72) Inventors:
• **YOSHINO, Takahiko**
  **Ichihara-shi, Chiba 290-0045 (JP)**
• **KURATA, Toshiharu**
  **Ichihara-shi, Chiba 290-0045 (JP)**

(74) Representative: **Gulde & Partner
Patent- und Rechtsanwaltskanzlei mbB
Berliner Freiheit 2
10785 Berlin (DE)**

(54) **RECYCLED STYRENE-BASED RESIN COMPOSITION AND MOLDED ARTICLE COMPRISING SAME**

(57)    Provided are a recycled styrene-based resin composition that has high extrudability and impact resistance even when the styrene-based recycled material content is high, and a molded article that is obtained by molding the recycled styrene-based resin composition and has an excellent molded article appearance. The recycled styrene-based resin composition includes a styrene-based recycled material (A) and a styrene-based virgin material (B), and is characterized in that the ash content of the recycled styrene-based resin composition after firing at 550°C is 2.5 mass% or less, and the mass average molecular weight (Mw) of the recycled styrene-based resin composition is 170,000 or greater.

**Description**

[Technical Field]

The present invention relates to a recycled styrene-based resin composition that has high extrudability and impact resistance even when the styrene-based recycled material content is high, and a molded article that is obtained by molding the recycled styrene-based resin composition and has an excellent molded product appearance.

[Background Art]

In recent years, heightened environmental awareness has led to a growing trend of utilizing recycled materials in plastic components for home appliances and office automation (OA) equipment. However, recycled materials often exhibit degraded physical properties due to deterioration or foreign matter contamination. Furthermore, the types and quantities of discarded equipment as a recycled material are inconsistent. Consequently, it has been difficult to achieve stable manufacturing, to exhibit the impact strength required for plastic components, or to obtain a favorable appearance.

[RELATED ART DOCUMENTS]

[PATENT DOCUMETNTS]

[Patent Document 1] JP2009-149768 A
[Patent Document 2] JP2020-007424 A

[Disclosure of the Invention]

[Problems to be Solved by the Invention]

The purpose of the present invention is to provide a recycled styrene-based resin composition that has high extrudability and impact resistance even when the styrene-based recycled material content is high, and a molded article that is obtained by molding the recycled styrene-based resin composition and has an excellent molded product appearance.

[Means of Solving the Problems]

(1) A recycled styrene-based resin composition containing styrene-based recycled material (A) and styrene-based virgin material (B),

in which ash content of the recycled styrene-based resin composition after firing at 550 °C is 2.5 mass% or less, and
a mass-average molecular weight (Mw) of the recycled styrene-based resin composition is 170,000 or more.

(2) The recycled styrene-based resin composition according to (1), in which the ash content contains at least one element selected from Si and Al.
(3) The recycled styrene-based resin composition according to (1) or (2), in which a ratio of a mass of the styrene-based recycled material (A) to a mass of the styrene-based virgin material (B) in the recycled styrene-based resin composition is 10/90 to 90/10.
(4) The recycled styrene-based resin composition according to any one of (1) to (3), in which a magnetic adhesion rate in the recycled styrene-based resin composition is 0.2 mass% or less.
(5) A molded article based on the recycled styrene-based resin composition according to any one of (1) to (4).

[Effects of the Invention]

The recycled styrene-based resin composition of the present invention exhibits high extrudability and impact resistance even with a high recycled material content, and its molded products have an excellent appearance. Therefore, molded articles made from the recycled styrene-based resin composition of the present invention can be advantageously used in applications such as OA equipment, home appliance parts, and miscellaneous goods. The higher the proportion of styrene-based recycled material (A) in the recycled styrene-based resin composition, the lower the amount of styrene-based virgin material (B) used, thereby reducing the environmental load associated with manufacturing the styrene-based virgin material (B).

Furthermore, conventional recycled styrene-based resin compositions sometimes exhibited reduced extrudability or deterioration in the appearance quality of molded products. Since the cause of the reduced extrudability and deterioration in the appearance quality of the molded products was the presence of metallic materials in the recycled styrene-based resin composition, specifying the magnetic adhesion rate in the recycled styrene-based resin composition enables improvement in the extrudability of the recycled styrene-based resin composition and the appearance of its molded products.

[Description of Embodiments]

The embodiments of the present invention will now be described. The various features described in the embodiments below can be combined with each other. Furthermore, the invention may be established independently for each feature.

[Recycled Styrene Resin Composition]

A recycled styrene-based resin composition according to an embodiment of the present invention contains styrene-based recycled material (A) and styrene-based virgin material (B),

in which ash content of the recycled styrene-based resin composition after firing at 550 °C is 2.5 mass% or less, and
a mass-average molecular weight (Mw) of the recycled styrene-based resin composition is 170,000 or more.

The ratio of the mass of the styrene-based recycled material (A) to the mass of the styrene-based virgin material (B) (styrene-based recycled material (A)/styrene-based virgin material (B)) in the recycled styrene-based resin composition may be 10/90 to 90/10, may be 10/90, 20/80, 25/75, 30/70, 35/65, 40/60, 45/55, 50/50, 55/45, 60/40, 65/35, 70/30, 75/25, 80/20, 90/10, or may be within the range between any two of the ratios exemplified herein. Within this range, it is possible to obtain: the recycled styrene-based resin composition, which exhibits high extrudability and impact resistance; and the molded article formed from the recycled styrene-based resin composition, which has an excellent molded product appearance. Furthermore, within this range, the higher the proportion of styrene-based recycled material (A) in the recycled styrene-based resin composition, the lower the amount of styrene-based virgin material (B) used, thereby reducing the environmental load associated with manufacturing the styrene-based virgin material (B).

<Styrene-based Recycled Material (A)>

The styrene-based recycled material (A) in the present invention refers to recycled material containing styrene-based resin, which may be either pre-consumer material or post-consumer material. The pre-consumer material refers to material recovered and reused from scrap, defective products generated during the production step of styrene-based resin products, and styrene-based resin products discarded before shipment due to unsold inventory or expiration of the quality assurance period. The post-consumer material refers to material recovered and reused after being shipped to the market and used by consumers. The amount of styrene-based recycled material (A) used refers to the total amount of styrene-based recycled material (A) used in combination.

In the present invention, from the viewpoint of manufacturing products with low environmental load and promoting green purchasing and improvement of the recycling rate, the styrene-based recycled material is preferably the post-consumer material. Specific examples of styrene-based resins suitable as post-consumer materials include expanded polystyrene, extruded sheets, containers, packaging materials, cases for recording media such as CDs and MDs, miscellaneous goods such as bobbins and hangers, plastic parts for electrical equipment and OA equipment, plastic parts for home appliances such as televisions and air conditioners, and plastic parts for OA equipment such as copiers.

<Styrene-based Virgin Material (B)>

The styrene-based virgin material (B) in the present invention refers to unused styrene-based resin that has not undergone the production step for styrene-based resin products. One or more types of the styrene-based resins described below may be used alone or in combination. When using multiple styrene-based virgin materials (B) together, the amount of styrene-based virgin material (B) used refers to the total amount of all styrene-based virgin materials (B) used together.

<Styrene Resins>

The following provides a detailed explanation of styrene-based resins.

Styrene-based resins are obtained by radical polymerization of aromatic vinyl compound monomers. If necessary, rubber modification may be performed by adding conjugated diene rubber polymers. They can be manufactured using known polymerization methods, such as bulk polymerization, bulk-suspension two-stage polymerization, or solution polymerization. Aromatic vinyl compound monomers are mono- or polycyclic aromatic vinyl monomers, such as either alone or mixtures of two or more types selected from styrene, o-methylstyrene, m-methylstyrene, p-methylstyrene, 2,4-dimethylstyrene, 2,5-dimethylstyrene, 3,4-dimethylstyrene, 3,5-dimethylstyrene, p-ethylstyrene, m-ethylstyrene, o-ethylstyrene, p-tert-butylstyrene, 1-vinylnaphthalene, 2-vinylnaphthalene, 1,1-diphenylethylene, isopropenylbenzene ($\alpha$-methylstyrene), isopropenyltoluene, isopropenylethylbenzene, isopropenylpropylbenzene, isopropenylbutylbenzene, isopropenylpentylbenzene, or isopropenylhexylbenzene, isopropenyloctylbenzene, preferably either alone or as mixtures of two or more types selected from styrene, o-methylstyrene, m-methylstyrene, p-methylstyrene, 2,4-dimethylstyrene, 2,5-dimethylstyrene, 3,4-dimethylstyrene, 3,5-dimethylstyrene, p-ethylstyrene, m-ethylstyrene, o-ethylstyrene, or p-tert-butylstyrene. Aromatic vinyl monomers may be used alone or in combination of two or more types. A homopolymer of styrene monomers is obtained by polymerizing styrene monomers, which are aromatic vinyl monomers. A homopolymer of styrene monomers means a polymer composed solely of styrene monomers, and may be a copolymer of two or more styrene monomers.

The conjugated diene rubber polymers used for rubber modification of styrene-based resins include polybutadiene, random or block copolymers of styrene-butadiene, polyisoprene, polychloroprene, random, block, or graft copolymers of styrene-isoprene, ethylene-propylene rubber, and ethylene-propylene-diene rubber. Among these, polybutadiene and random, block, or graft copolymers of styrene-butadiene are particularly preferred. These may also be partially hydrogenated.

The styrene-based resins include polystyrene (GPPS), rubber-modified polystyrene (HIPS), ABS resin (acrylonitrile-butadiene-styrene copolymer), AS resin (acrylonitrile-styrene copolymer), MS resin (methyl methacrylate-styrene copolymer), AAS resin (acrylonitrile-acrylic rubber-styrene copolymer), AES resin (acrylonitrile-ethylene propylene-styrene copolymer).

The polymerization methods for styrene-based resins include bulk polymerization, solution polymerization, suspension polymerization, and emulsion polymerization. In terms of quality and productivity, bulk polymerization and solution polymerization are preferred, and continuous polymerization is preferred. Solvents that can be used include benzene; alkylbenzenes such as toluene, ethylbenzene, and xylene; ketones such as acetone and methyl ethyl ketone; and aliphatic hydrocarbons such as hexane and cyclohexane.

In continuous polymerization, the polymerization step first employs conventional fully mixed tank-type stirred tanks or tower-type reactors. The polymerization reaction is controlled, for example, by adjusting the polymerization temperature, to achieve the target molecular weight, molecular weight distribution, and reaction conversion rate. The polymer solution containing the polymer after the polymerization step is transferred to the devolatilization step, where unreacted monomers and polymerization solvents are removed. The devolatilization step is perfomed by such as a vacuum devolatilization tank with a heater or a devolatilization extruder with a vent. The molten polymer after the devolatilization step is transferred to the pelletizing step. In the pelletizing step, the molten resin is extruded through a porous die into strand form and processed into pellets by a cold-cut method, an air hot-cut method, or an underwater hot-cut method.

During the polymerization of styrene-based resins, polymerization initiators and chain transfer agents may be used as needed. Radical polymerization initiators are preferred as polymerization initiators, and conventionally known examples include peroxyketals such as 1,1-Di(t-butylperoxy)cyclohexane, 2,2-Di(t-butylperoxy)butane, 2,2-Di(4,4-di-t-butylperoxycyclohexyl)propane, 1,1-Di(t-amylperoxy)cyclohexane; hydroperoxides such as cumene hydroperoxide and t-butyl hydroperoxide; alkyl peroxides such as t-butyl peroxyacetate and t-amyl peroxyisononanoate; dialkyl peroxides such as t-butyl cumyl peroxide, di-t-butyl peroxide, dicumyl peroxide and di-t-hexyl peroxide; peroxy esters such as t-butyl peroxyacetate, t-butyl peroxybenzoate and t-butyl peroxyisopropyl monocarbonate; peroxy carbonates such as t-butyl peroxyisopropyl carbonate, polyether tetrakis(t-butyl peroxycarbonate); N,N'-azobis(cyclohexane-1-carbonitrile), N,N'-azobis(2-methylbutyronitrile), N,N'-azobis(2,4-dimethylvaleronitrile), N,N'-azobis[2-(hydroxymethyl)propanonitrile]. One or more of these may be used in combination. Chain transfer agents include aliphatic mercaptans, aromatic mercaptans, pentaphenyl ethane, $\alpha$-methylstyrene dimer, and terpinolene.

<Mass-Average Molecular Weight (Mw)>

From the perspective of strength and moldability, the mass-average molecular weight (Mw) of the recycled styrene-based resin composition is preferably 170,000 to 700,000, and more preferably 170,000 to 400,000. Specifically, for example, it may be 170,000, 180,000, 190,000, 200,000, 250,000, 300,000, 350,000, 400,000, 450,000, 500,000, 550,000, 600,000, 650,000 or 700,000, or may be within the range between any two of the numbers listed here. Within this range, a styrene-based resin composition with high impact resistance and an excellent balance of flowability and heat resistance can be obtained. The mass-average molecular weight (Mw) of the homopolymer of styrene monomers can be controlled by factors such as the reaction temperature of the polymerization step, residence time, type and amount of polymerization initiator, type and amount of chain transfer agent, and type and amount of solvent used during polymerization.

The mass-average molecular weight (Mw) of the recycled styrene-based resin composition can be measured, for example, using gel permeation chromatography (GPC) under the following conditions.

GPC Instrument: Alliance System 2695 (WATERS)
Column: TSKgel GMHXL (TOSOH)
Mobile phase: Tetrahydrofuran
Sample concentration: 0.2 mass%
Temperature: Oven at 40 °C, Detector at 40 °C
Detector: Differential Refractometer Alliance System 2414 (WATERS)

Molecular weight is calculated from the elution curve of monodisperse polystyrene at each elution time and expressed as the molecular weight equivalent to polystyrene.

<Ash Content >

The ash content of the recycled styrene-based resin composition after firing at 550 °C is 2.5 mass% or less, and preferably 1.9 mass% or less. The ash content is derived from the styrene-based recycled material (A). Furthermore, the ash content of the recycled styrene-based resin composition after firing at 550 °C may be 0.001 mass% or more, and is preferably 0.01 mass% or more. Specifically, it may be within the range selected from the group consisting of, for example, 0.001, 0.005, 0.01, 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4 and 2.5 mass%. Within this range, a recycled styrene-based resin composition with excellent extrudability can be produced. Specifically, the extrudability extends the screen life of the screen (e.g., #60 plain weave mesh (an opening size of 280 μm)) used during extrusion of the recycled styrene-based resin composition. The ash content of the recycled styrene-based resin composition after firing at 550 °C can be adjusted by varying the proportion of styrene-based recycled material (A) in the recycled styrene-based resin composition.

The ash content of the recycled styrene-based resin composition after firing at 550 °C can be calculated using the following formula.

$$\text{Ash content (mass\%)} = (A/C) * 100$$

C: Mass of recycled styrene-based resin composition before firing
A: Mass of residue (ash) after firing

The firing time can be adjusted based on the mass of the recycled styrene-based resin composition. For 10 to 11 g of pellets of the recycled styrene-based resin composition, ash can be obtained by heating for 1 hour.

The firing includes a temperature rise step and a firing step. In the temperature rise step, the recycled styrene-based resin composition is heated to the temperature at which it becomes ash. In the firing step, the recycled styrene-based resin composition becomes ash. The temperature rise step may include one or more temperature stabilization steps. The presence of one or more temperature stabilization steps prevents sudden boiling of the molten recycled styrene-based resin composition. The temperature in the temperature stabilization step is, for example, 300 °C to 500 °C, and may be within the range of any two values selected from the group consisting of 300, 350, 400, 450, and 500 °C. The duration of the temperature stabilization step is from 0.5 to 5 hours and may be within the range of any two values selected from the group consisting of 0.5, 1, 1.5, 2, 2.5, 3, 3.5, 4, 4.5, and 5 hours. The temperature stabilization step may, for example, include a 3-hour process at 350 °C, a 2-hour process at 400 °C, a 1-hour process at 450 °C, and a 1-hour process at 500 °C in that order. The temperature in the firing step may be from 505 to 600 °C and may be within the range of any two values selected from the group consisting of 505, 510, 520, 530, 540, 550, 560, 570, 580, 590, and 600 °C. The duration of the firing step is 0.5 to 5 hours and may be within the range of any two values selected from the group consisting of 0.5, 1, 1.5, 2, 2.5, 3, 3.5, 4, 4.5 and 5 hours. The temperature and duration in the temperature stabilization step and the temperature and duration in the firing step can be varied depending on the amount of the recycled styrene-based resin composition and the ratio of the mass of the styrene-based recycled material (A) in the recycled styrene-based resin composition to the mass of the styrene-based virgin material (B).

<Si and Al>

The ash content may contain at least one element selected from Si and Al. Since the styrene-based virgin material (B) does not contain metallic elements such as Si and Al, Si and Al are derived from the styrene- based recycled material (A).

The content of Si element among the inorganic elements present in the ash may be 0.1 to 9.0 mass%, and is preferably 0.3 to 8.2%. Specifically, for example, it may be 0.1, 0.2, 0.3, 0.4, 0.5, 1.0, 1.1, 1.2, 1.3, 1.4, 1.5, 1.6, 1.7, 1.8, 1.9, 2.0, 3.0, 3.4, 3.5, 3.6, 3.7, 3.8, 3.9, 4.0, 4.1, 4.2, 4.3, 4.4, 4.5, 4.6, 4.7, 4.8, 4.9, 5.0, 6.0, 7.0, 8.0, 8.1, 8.2, 8.3, 8.4, 8.5, 8.6, 8.7, 8.8, 8.9 or 9.0 mass%, and may also be within the range between any two of the values exemplified herein.

The content of Al element among inorganic elements present in the ash may be 0.05 to 2.0 mass%, and is preferably 0.1 to 1.8%. Specifically, for example, it may be 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0 mass%, and may also be within the range between any two of the values exemplified herein.

If the content of the Si element and the content of the Al element among the inorganic elements present in the ash fall within the above ranges, a recycled styrene-based resin composition with excellent extrudability can be produced.

Each content of Si and Al in the ash can be detected and analyzed by SEM-EDX. Using SEM-EDX, the content of each element in the ash is determined, and the respective percentages of Si and Al are expressed as a percentage of the total inorganic elements, which is set to 100%.

<Magnetic Adhesion Rate>

When the styrene-based recycled material (A) contained in the recycled styrene-based resin composition is post-consumer material, the recycled styrene-based resin composition may contain metal materials. The metal materials may be ferromagnetic materials. The metal materials may include iron and iron-group transition metals (e.g., Co, Ni, Mn and Cr) as well as alloys, compounds, and oxides thereof. The metal materials may have a size that is removable by a magnet.

In conventional recycled styrene-based resin compositions, metal materials removable by manual labor were removed, but metal materials difficult or impossible to remove by manual labor remained. As a result, it became apparent that residual metal materials in the recycled styrene-based resin composition affected the extrusion properties of the recycled styrene-based resin composition and the appearance of its molded products. Therefore, it is preferable that the amount of metal material in the recycled styrene-based resin composition be as low as possible. The amount of metal material in the recycled styrene-based resin composition may be defined by the magnetic adhesion rate of the recycled styrene-based resin composition.

The magnetic adhesion rate in the recycled styrene-based resin composition may be 0.2 mass% or less, and may be 0.2, 0.1, 0.09, 0.08, 0.07, 0.06, 0.05, 0.04, 0.03, 0.02, 0.01, 0.009, 0.008, 0.007, 0.006, 0.005, 0.004, 0.003, 0.002, or 0.001 mass% or less. By reducing the magnetic adhesion rate to the above values, a recycled styrene-based resin composition with an excellent molded product appearance can be produced, and a molded article formed by molding said recycled styrene-based resin composition can be obtained.

The magnetic adhesion rate in the recycled styrene-based resin composition can be calculated using the following formula.

$$\text{Magnetic adhesion rate (mass\%)} = (M/C) * 100$$

C: Mass of the recycled styrene-based resin composition before magnetic recovery
M: Mass of the recycled styrene-based resin composition recovered using a magnet

<Impact Resistance Evaluation Method>

The impact resistance of the recycled styrene-based resin composition can be evaluated using the Charpy impact strength (compliant with JIS K7111). The Charpy impact strength of the recycled styrene-based resin composition is preferably 8 kJ/m$^2$ or higher.

<Other Components>

The recycled styrene-based resin composition of the present invention may include other additives within the scope of the present invention, for example, other known additives such as reinforcing agents, flame retardants, dyes, anti-staining agents, lubricants, antioxidant agents, anti-aging agents, light stabilizers, antistatic agents, fillers, crystallization nucleating agents and compatibilizers as well as modifiers such as colorants like titanium dioxide and carbon black. The method of adding these additives is not particularly limited and may be carried out using known methods. For example, methods such as adding during the raw material charging step, polymerization step, or finishing step when manufacturing the recycled styrene- based resin composition, or adding during the resin composition mixing step using an extruder or molding machine, can be applied.

<Method for Manufacturing Recycled Styrene Resin Composition>

The mixing method for the recycled styrene-based resin composition of the present invention is not particularly limited and may employ known mixing techniques. For example, using mixing equipment such as mixer-type mixing machines, V- type blenders, and tumbler-type mixers, various raw materials (e.g., styrene-based recycled material (A) and styrene-based virgin material (B)) can be pre-mixed. By melting and mixing the mixture, a uniform resin composition can be produced. The melt-mixing apparatus is also not particularly limited, but examples include Banbury-type mixers, kneaders, rolls, single-screw extruders, special single-screw extruders, and twin-screw extruders. Furthermore, there is also a method of separately adding additives such as flame retardants during the melt-mixing step in the extruder or similar apparatus.

<Molded Articles>

Molded articles formed from the recycled styrene-based resin composition can be manufactured by molding the recycled styrene-based resin composition. There are no particular restrictions on the molding methods for obtaining molded products, films, sheets, and foams from the recycled styrene-based resin composition of the present invention. Known molding methods, e.g., extrusion molding methods such as calendering, hollow molding, extrusion foaming, profile extrusion, laminate molding, inflation molding, T-die film molding, sheet molding, vacuum forming, vacuum-pressure forming, as well as injection molding methods such as injection molding, RIM molding and injection foaming molding, can be used.

Thermoforming methods include conventionally known general forming methods such as vacuum forming and vacuum-pressure forming or such as free drawing forming, plug and ridge forming, ridge forming, matched mold forming, straight forming, drape forming, reverse draw forming, air slip forming, plug assist forming, and plug assist reverse draw forming as their applications.

[EXAMPLES]

The present invention will be described in detail below with reference to examples and comparative examples, but the invention is not limited to these.

The materials used in the examples and comparative examples are as follows.

[Styrene-based Recycled Material (A)]

(A-1) Post-consumer material, polystyrene resin, ash content: 0.3 mass%, magnetic adhesion rate: 0.02 mass%
(A-2) Post-consumer material, polystyrene resin, ash content: 0.7 mass%, magnetic adhesion rate: 0.3 mass%
(A-3) Post-consumer material, polystyrene resin, ash content: 4.0 mass%, magnetic adhesion rate: 0.1 mass%
(A-4) Post-consumer material, polystyrene resin, ash content: 4.0 mass%, magnetic adhesion rate: 0.5 mass%
(A-5) Post-consumer material, polystyrene resin, ash content: 6.0 mass%, magnetic adhesion rate: 0.7 mass%

[Styrene-based virgin material (B)]

(B-1) HIPS (rubber-modified polystyrene resin, rubber polymer content 9 mass% in 100 mass% resin, molecular weight: Mw 200,000
(B-2) HIPS (rubber-modified polystyrene resin, rubber-like polymer content 10 mass% in 100 mass% resin, molecular weight: Mw 160,000

(Examples 1-8, Comparative Examples 1-3)

Each component was melt-mixed and extruded using a twin-screw extruder (TEM26SX, Toshiba Corporation) at the compounding ratios shown in Tables 1 and 2, under the following conditions: total feed rate of 30 kg/h and screw rotation speed of 300 rpm. The resin temperature during the process was 235 to 240 °C. The extruded strands were water-cooled and then fed into a pelletizer to obtain pellets of the recycled styrene-based resin composition.

Evaluation of Extrudability (Screen Life)

A plate with a 1 cm$^2$ square opening and a #60 plain weave mesh (280 $\mu$m mesh size) were installed upstream of the die outlet of the extruder. During extrusion, the resin pressure (the resin pressure at which the mesh gradually clogged and the pressure rose) reached 8.5 MPa. During extrusion molding, the extrusion amount (kg) was recorded at the point when the resin pressure (which gradually increases due to clogging of the mesh) reached 8.5 MPa. If 70 kg was extruded without the resin pressure reaching 8.5 MPa, the result was recorded as >70. A result of 40 kg or more was regarded as acceptable, while less than 40 kg was regarded as unacceptable.

Ash Content (Unit: mass%)

10-11 g of pellets were placed into a magnetic crucible. Place the magnetic crucible into an electric furnace (Yamato Scientific, FP102) at 350 °C for 3 hours, then at 400 °C for 2 hours, followed by 450 °C for 1 hour, and finally 500 °C for 1 hour. Afterward, the weight of the residual ash was measured.

Elemental Analysis of Ash (Unit: mass%)

The ash obtained was detected and analyzed using SEM-EDX (JSM-6510A, JEOL Ltd.) to determine the content of each element.

Magnetic Adhesion Rate (Unit: mass%)

Pellets (900-1100 g) were spread on an aluminum plate. A 12,000 Gauss magnet was scanned over the pellets, and the magnetically adhered pellets were collected. The mass of the collected pellets was measured.

Molding Product

After heating and drying the pellets at 80 °C for 3 hours, the pellets were molded using an injection molding machine (J1E-P model, manufactured by Nippon Steel Corporation) at a cylinder temperature of 220 °C and a mold temperature of 45 °C to produce 10 plates.
The evaluation criteria for the molded product appearance are as follows.

A: Visual inspection revealed no surface irregularities on any of the 10 plates.
B: Visual inspection revealed unevenness on the plate surface in 1 to 5 out of 10 plates.
C: Visual inspection revealed unevenness on the plate surface in 6 or more out of 10 plates.

A and B are considered pass, while C is considered fail.

Charpy impact strength

Test specimens were prepared using an injection molding machine and tested according to JIS K7111.

[Table 1]

| | | Unit | Example 1 | Example 2 | Example 3 | Example 4 | Example 5 | Example 6 | Example 7 | Example 8 |
|---|---|---|---|---|---|---|---|---|---|---|
| Raw material | AI Recycled material | Mass% | 50 | 75 | 25 | | | 90 | 10 | |
| | A-2 Recycled material | Mass% | | | | | | | | 50 |
| | A-3 Recycled material | Mass% | | | | 50 | | | | |
| | A-4 Recycled material | Mass% | | | | | 50 | | | |
| | A-5 Recycled material | Mass% | | | | | | | | |
| | B-1 Virgin material | Mass% | 50 | 25 | 75 | 50 | 50 | 10 | 90 | 50 |
| | B-2 Virgin material | Mass% | | | | | | | | |
| Composition | Ash content | Mass% | 0.1 | 0.2 | 0.05 | 1.9 | 1.9 | 0.2 | 0.01 | 0.3 |
| | Si | Mass% in ash | 1.8 | 3 | 1.2 | 4.8 | 8.2 | 3.6 | 0.3 | 4.2 |
| | Al | Mass% in ash | 1.2 | 1.6 | 0.6 | 1.8 | 3 | 1.8 | 0.1 | 1.8 |
| | Molecular weight (Mw) | - | 19 | 18 | 20 | 19 | 19 | 18 | 20 | 19 |
| | Magnetic adhesion rate | Mass% | 0.005 | 0.007 | 0.002 | 0.02 | 0.2 | 0.01 | 0.001 | 0.13 |
| Properties | Molded product appearance | - | A | A | A | A | B | A | A | B |
| | Charpy | kJ/m$^2$ | 8 | 7.5 | 8.5 | 7.7 | 7.5 | 7.2 | 9 | 7.4 |
| | Extrudability (Screen Life) | kg | >70 | 57 | >70 | 43 | 40 | 50 | >70 | 54 |

[Table 2]

| | | Unit | Comparative example 1 | Comparative example 2 | Comparative example 3 |
|---|---|---|---|---|---|
| Raw material | A-1 Recycled material | Mass% | | 50 | 100 |
| | A-2 Recycled material | Mass% | | | |
| | A-3 Recycled material | Mass% | | | |
| | A-4 Recycled material | Mass% | | | |
| | A-5 Recycled material | Mass% | 50 | | |
| | B-1 Virgin material | Mass% | 50 | | |
| | B-2 Virgin material | Mass% | | 50 | |
| Composition | Ash content | Mass% | 3 | 0.1 | 0.2 |
| | Si | Mass% in ash | 7.5 | 1.8 | 3.6 |
| | Al | Mass% in ash | 3 | 1.2 | 1.8 |
| | Molecular weight (Mw) | - | 19 | 16 | 17 |
| | Magnetic adhesion rate | Mass% | 0.25 | 0.005 | 0.009 |
| Properties | Molded product appearance | - | C | A | A |
| | Charpy | kJ/m$^2$ | 7.5 | 6 | 6.7 |
| | Extrudability (Screen Life) | kg | 21 | >70 | 50 |

From the results of the examples shown in Table 1, it was found that the resin composition of the present invention is excellent in the appearance, impact resistance, and extrudability of molded products. On the other hand, from the results of the comparative examples shown in Table 2, it was found that resin compositions not satisfying the requirements of the present invention exhibited inferior appearance and extrudability, or inferior impact resistance of the molded products.

[Industrial Applicability]

The resin composition of the present invention exhibits high extrudability and impact resistance even with a high recycled material content, and also has an an excellent molded product appearance. Therefore, molded articles made from the resin composition of the present invention can be advantageously used in applications such as OA equipment, home appliance components, and miscellaneous goods, and possess industrial applicability.

## Claims

1. A recycled styrene-based resin composition comprising styrene-based recycled material (A) and styrene-based virgin material (B),

   wherein ash content of the recycled styrene-based resin composition after firing at 550 °C is 2.5 mass% or less, and
   a mass-average molecular weight (Mw) of the recycled styrene-based resin composition is 170,000 or more.

2. The recycled styrene-based resin composition according to claim 1, wherein the ash content comprises at least one element selected from Si and Al.

3. The recycled styrene-based resin composition according to claim 1 or 2, wherein a ratio of a mass of the styrene-based recycled material (A) to a mass of the styrene-based virgin material (B) in the recycled styrene-based resin composition is 10/90 to 90/10.

4. The recycled styrene-based resin composition according to any one of claims 1 to 3, wherein a magnetic adhesion rate in the recycled styrene-based resin composition is 0.2 mass% or less.

5. A molded article based on the recycled styrene-based resin composition according to any one of claims 1 to 4.

## INTERNATIONAL SEARCH REPORT

| International application No. |
| --- |
| **PCT/JP2024/012207** |

**A. CLASSIFICATION OF SUBJECT MATTER**

*C08L 25/04*(2006.01)i; *C08J 11/04*(2006.01)i
FI:   C08L25/04; C08J11/04 CET

According to International Patent Classification (IPC) or to both national classification and IPC

**B. FIELDS SEARCHED**

Minimum documentation searched (classification system followed by classification symbols)

C08L25/04; C08J11/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2004-137388 A (IDEMITSU PETROCHEMICAL CO., LTD.) 13 May 2004 (2004-05-13) claims, paragraphs [0014]-[0019] | 1-5 |
| X | JP 2006-63200 A (ONISHI KASEI KOGYO KK) 09 March 2006 (2006-03-09) claims, paragraphs [0039]-[0047] | 1-5 |
| A | JP 2002-86636 A (IDEMITSU PETROCHEMICAL CO., LTD.) 26 March 2002 (2002-03-26) paragraph [0041] | 1-5 |
| A | JP 2007-211230 A (HITACHI CHEMICAL CO., LTD.) 23 August 2007 (2007-08-23) paragraphs [0002]-[0003] | 1-5 |
| A | WO 2022/158452 A1 (TOYO STYRENE CO., LTD.) 28 July 2022 (2022-07-28) entire text | 1-5 |
| A | JP 2019-59816 A (DENKA CO., LTD.) 18 April 2019 (2019-04-18) entire text | 1-5 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 May 2024** | **11 June 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

| International application No. |
| --- |
| **PCT/JP2024/012207** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2012-201688 A (SEKISUI PLASTICS CO., LTD.) 22 October 2012 (2012-10-22) entire text | 1-5 |
| E, X | WO 2024/080342 A1 (PS JAPAN CORP.) 18 April 2024 (2024-04-18) claims, paragraphs [0005], [0020], [0023]-[0024], [0026], [0030], [0034], [0110]-[0124] | 1-5 |

**INTERNATIONAL SEARCH REPORT**
Information on patent family members

International application No.

**PCT/JP2024/012207**

| Patent document cited in search report | | | Publication date (day/month/year) | Patent family member(s) | Publication date (day/month/year) |
|---|---|---|---|---|---|
| JP | 2004-137388 | A | 13 May 2004 | (Family: none) | |
| JP | 2006-63200 | A | 09 March 2006 | (Family: none) | |
| JP | 2002-86636 | A | 26 March 2002 | (Family: none) | |
| JP | 2007-211230 | A | 23 August 2007 | (Family: none) | |
| WO | 2022/158452 | A1 | 28 July 2022 | EP 4282916 A1 entire text CN 116670208 A | |
| JP | 2019-59816 | A | 18 April 2019 | (Family: none) | |
| JP | 2012-201688 | A | 22 October 2012 | (Family: none) | |
| WO | 2024/080342 | A1 | 18 April 2024 | (Family: none) | |

Form PCT/ISA/210 (patent family annex) (July 2022)

**REFERENCES CITED IN THE DESCRIPTION**

**Patent documents cited in the description**

- JP 2009149768 A

- JP 2020007424 A